# EUROPÄISCHE PATENTSCHRIFT

(11) **EP 3 661 398 B1**
(45) Veröffentlichungstag und Bekanntmachung des Hinweises auf die Patenterteilung: **18.11.2026**
(21) Anmeldenummer: 19720102.3
(22) Anmeldetag: 23.04.2019
(51) Int. Cl.: A47J 37/07

(54) **ZUSAMMENLEGBARE GRILLVORRICHTUNG MIT GASBETRIEBENER HEIZEINRICHTUNG**
FOLDING GRILL DEVICE HAVING GAS-OPERATED HEATING DEVICE
ENSEMBLE BARBECUE PLIABLE ÉQUIPÉ D'UN SYSTÈME DE CHAUFFAGE FONCTIONNANT AU GAZ

(30) Priorität: 23.04.2018 DE 102018109739
(43) Veröffentlichungstag der Anmeldung: 10.06.2020
(73) Patentinhaber: Vennskap GmbH & Co. KG, 40668 Meerbusch (DE)
(72) Erfinder: BATTEL, Christian, 40668 Meerbusch (DE)
(74) Vertreter: Lohmanns Lohmanns & Partner mbB
(86) Internationale Anmeldenummer: PCT/EP2019/060335
(87) Internationale Veröffentlichungsnummer: WO 2019/206887

(56) Entgegenhaltungen:
- CH-A2- 709 799
- US-A- 5 575 195
- US-A1- 2010 288 261
- US-A1- 2015 289 715
- US-B1- 6 425 387
- US-B1- 6 672 303

## Beschreibung

Die Erfindung betrifft eine zusammenlegbare Grillvorrichtung, bestehend aus einem Trägerrahmen und einem von dem Trägerrahmen gehaltenen Grillrost, wobei der Trägerrahmen aus mehreren plattenförmigen Wänden gebildet ist, die untereinander durch lösbare Steckverbindungen verbunden sind. So ist die Grillvorrichtung durch Lösen dieser Steckverbindungen in einen Transport- und Lagerzustand überführbar, in welchem die plattenförmigen Wände und der Grillrost zu einem flachen Stapel übereinandergelegt sind.

Solche zusammenlegbaren Grillvorrichtungen werden mobil und tragbar eingesetzt, da sie leicht und schnell auf- und abzubauen sind. Ihre Einzelteile sind einfach und vorzugsweise ohne Werkzeug zusammensteckbar, um eine stabile Grillvorrichtung zu montieren. Gleichzeitig können die Einzelteile auch einfach wieder voneinander gelöst werden, um sie beispielsweise in einem relativ flachen Stapel zu lagern und/oder zu transportieren. Aus der CH 709799 A2 ist beispielsweise eine solche tragbare Grillvorrichtung bekannt. Die tragbare Grillvorrichtung umfasst vier Seitenwände, eine fünfte als Bodenteil ausgebildete Seitenwand, einen Grillrost zum Auflegen des zu grillenden Guts und einen Holzkohlenrost zum Auflegen von Holzkohle, die angezündet als Wärmequelle dient. Die vier Seitenwände werden mittels einer Steckverbindung miteinander formschlüssig verbunden, wobei der Grillrost wiederum mit zwei parallel zueinander angeordneten Seitenwänden formschlüssig verbunden ist. Die tragbare Grillvorrichtung kann in flache Einzelteile einfach zerlegt werden und eignet sich daher für Outdooraktivitäten, insbesondere fürs Campen oder für Wandertouren. Die tragbare Grillvorrichtung kann dabei platzsparend beispielsweise in einem Rucksack verstaut werden.

Nachteilig an dieser oder ähnlichen bekannten Grillvorrichtungen ist es jedoch, dass diese mit Holzkohle betrieben werden, welche auf dem Holzkohlenrost platziert wird, um die erforderliche Hitze zum Grillen bereitzustellen. Dies bedeutet für einen Nutzer der mobilen Grillvorrichtung, dass er bei Wandertouren einen Vorrat an Holzkohle mitführen muss. Dadurch wird der Verstauraum in seinem Rucksack eingeschränkt, und das zu tragende Gepäckgewicht wird durch die mitzuführende Holzkohle für den Benutzer unnötigerweise erhöht. Darüber hinaus weist die Holzkohle den Nachteil auf, dass beim Grillen ein offenes Feuer entsteht. Insbesondere in Gegenden, in denen eine hohe Trockenheit herrscht, kann ein durch die Holzkohle verursachter Funkenflug zu Bränden führen. Der Betrieb einer solchen mobilen Grillvorrichtung kann dann durchaus für den Benutzer gefährlich werden, wenn die trockene Umgebung rund um die tragbare Grillvorrichtung in Brand gerät. Ferner kann es in bestimmten Gegenden grundsätzlich verboten sein, mit offenem Feuer zu grillen, so dass tragbare Grillvorrichtungen mit Holzkohlebetrieb nicht zur Anwendung kommen dürfen.

Die Patente US 6 425 387 B1 und US 6 672 303 B1 betreffen jeweils eine zusammenlegbare Grillvorrichtung mit einem in einem Rahmen gehaltenen gasbetriebenen Brenner. Daher ist es die Aufgabe der Erfindung, eine kompakte zusammenlegbare Grillvorrichtung bereitzustellen, welche platzsparend verstaubar und trotzdem sicher durch einen Benutzer betreibbar ist.

Erfindungsgemäß wird diese Aufgabe durch eine zusammenlegbare Grillvorrichtung gemäß dem unabhängigen Anspruch 1 gelöst. Vorteilhafte Weiterbildungen der Grillvorrichtung ergeben sich aus den Unteransprüchen 2-9.

Es ist darauf hinzuweisen, dass die in den Ansprüchen einzeln aufgeführten Merkmale in beliebiger, technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zusätzlich.

Die erfindungsgemäße Grillvorrichtung ist zusammenlegbar. Hierzu besteht sie aus einem Trägerrahmen und einem von dem Trägerrahmen gehaltenen Grillrost, wobei der Trägerrahmen aus mehreren plattenförmigen Wänden gebildet ist, die untereinander durch lösbare Steckverbindungen verbunden sind. Die plattenförmigen Wände bestehen vorzugsweise aus Blechen aus Edelstahl oder einem anderen hitzebeständigen Metallwerkstoff. Die Dicke der verwendeten Bleche liegt zwischen 1 und 8mm, wobei insbesondere der Grillrost auch dicker als die Wände des Trägerrahmens ausgeführt sein kann.

Die Grillvorrichtung ist durch Lösen der Steckverbindungen in einen Transport- und Lagerzustand überführbar, in welchem die plattenförmigen Wände und der Grillrost zu einem flachen Stapel übereinandergelegt sind. Dabei können die plattenförmigen Wände vollständig eben ohne jegliche Erhebungen oder Vorsprünge ausgeführt sein, wodurch sie aufeinander gelegt einen besonders flachen Stapel ergeben. Doch auch Wände mit kleineren Erhebungen oder Vorsprüngen sind noch als plattenförmige Wände im Sinne dieser Erfindung anzusehen. Beispielsweise kann auch vorgesehen sein, dass in einem solchen Stapel aus Einzelteilen ein Vorsprung in einer Wand in eine Aussparung in der nächstliegenden Wand eingreift. Auch leicht abgewinkelte Platten sind als plattenförmige Wände im Sinne der Erfindung anzusehen. Beispielsweise kann eine solche Abwinkelung in der Größenordnung von etwa 179° bis 160° liegen. Ferner können auch gegenläufig abgewinkelte Bleche verwendet werden.

Wesentlich für die Erfindung ist jedoch, dass die Einzelteile der zusammenlegbaren Grillvorrichtung aufeinandergelegt einen flachen Stapel ergeben, dessen Höhe um ein Vielfaches geringer ist als seine Abmessungen in die anderen Richtungen.

Erfindungsgemäß ist vorgesehen, dass eine zusammenlegbare Grillvorrichtung mit einem so gebildeten Trägerrahmen wenigstens zwei gegenüberliegende Lagerelemente aufweist, in denen eine mit einem brennbaren Gas betriebene Heizeinrichtung lösbar gehalten ist. Die Erfindung kombiniert somit die Vorteile einer zusammenlegbaren Grillvorrichtung mit einer fluidbetriebenen Heizeinrichtung wie einem Gasbrenner. Dabei wird ein herkömmlicher Gasbrenner jedoch nicht einfach unter einen Grillrost gestellt, wie man es bei bekannten zusammenlegbaren Grillvorrichtungen vornehmen könnte. Vielmehr sind an dem Trägerrahmen der Grillvorrichtung spezielle Lagerelemente vorgesehen, in denen eine mit einem brennbaren Fluid betriebene Heizeinrichtung lösbar gehalten ist. So ist die Heizeinrichtung gegenüber dem Trägerrahmen gehalten, was die Sicherheit beim Betrieb der Grillvorrichtung gewährleistet.

Gleichzeitig ist die Heizeinrichtung jedoch von dem Trägerrahmen lösbar und zwar vorzugsweise ohne dass gesonderte Befestigungsmittel gelöst werden müssen. Vorzugsweise erfolgt das Lösen der Heizeinrichtung daher auch ohne Werkzeug. Die Heizeinrichtung ist somit insbesondere nicht angeschraubt, vernietet oder sogar angeschweißt, sondern als Teil der zusammenlegbaren Grillvorrichtung einfach von dem Trägerrahmen lösbar. Hierfür kommen beispielsweise formschlüssige Steckverbindungen in Frage, die jedoch durch einfache Zug- und/oder Drehbewegungen wieder auflösbar sind. Auch die Heizeinrichtung kann so entfernt und in einem Stapel aus Einzelteilen untergebracht werden.

Durch diese erfindungsgemäße Ausgestaltung einer Grillvorrichtung ergeben sich mehrere Vorteile, die insbesondere für Outdooraktivitäten, wie Wandertouren oder Camping von Bedeutung sind. Alle Einzelteile der Grillvorrichtung können einfach, kompakt und sicher beispielsweise im Wandergepäck von einem Benutzer verstaut und transportiert werden. Darüber hinaus kann in vorteilhafter Weise darauf verzichtet werden, Holzkohle im Wandergepäck zu verstauen, die ansonsten für eine Vielzahl von Grillvorgängen benötigt würde. Bei der Verwendung der erfindungsgemäßen Grillvorrichtung muss lediglich ein Vorratsbehälter mit dem brennbaren Gas in flüssiger Form mitgenommen werden. Der Vorratsbehälter kann platzsparend im Wandergepäck verstaut werden.

Auch das Problem der brandsicheren Entsorgung von verbrauchter Holzkohle ergibt sich nicht. Ferner kann die Grillvorrichtung auch in Gegenden eingesetzt werden, in denen offenes Feuer mit Holz oder Holzkohle untersagt ist.

Ein weiterer Vorteil der erfindungsgemäßen Grillvorrichtung ist, dass die Sicherheit für den Benutzer während des Grillvorgangs erheblich verbessert wird. Ein unkontrollierter Funkenflug, wie dies beispielsweise bei brennender Holzkohle der Fall ist, kann durch das Verwenden der mit dem brennbaren Fluid betreibbaren Heizeinrichtung in vorteilhafterweise verhindert werden. In einer Gefahrensituation kann der Benutzer durch ein Abdrehen der Gaszufuhr eine Flamme sofort eindämmen und das Risiko eines Brandes minimieren oder sogar verhindern.

Darüber hinaus kann durch die Anbringung der Heizeinrichtung an dem Trägerrahmen der Grillvorrichtung sichergestellt werden, dass die Ausströmrichtung des Gases im Wesentlichen konstant bleibt und zielgerichtet dem Grillrost zuströmt. Das zu grillende Gut kann daher über der Wärmequelle genau positioniert werden, wodurch wie bei üblichen Gasgrills eine gute Garung und Erhitzung des zu grillenden Guts erreicht werden kann.

Im Sinne der Erfindung handelt es sich bei der mobilen Grillvorrichtung daher um eine leicht zusammen- und auseinanderbaubare Gar-, Grill- und/ oder Kochstelle, die insbesondere für Camping oder für Wandertouren geeignet ist. Einzelteile der mobilen Grillvorrichtung können ohne großen Aufwand montiert und demontiert werden. Die Einzelteile sind kompakte und stabile Bauelemente, welche platzsparend beispielsweise in einem Rucksack oder in einer Tasche verstaut werden können. Die Montage und Demontage der Einzelteile ist in wenigen Minuten durch den Benutzer durchführbar, und es kann vorzugsweise auf zusätzliche Werkzeuge zur Montage und Demontage verzichtet werden, weil die Grillvorrichtung beispielsweise auf Schraubelemente verzichtet.

Die Heizeinrichtung ist als rohrförmiger Brennstab mit mehreren Austrittsöffnungen zum Ausströmen von brennbarem Gas ausgebildet. Die Austrittsöffnungen sind beispielsweise beabstandet zueinander in einer oder mehreren Reihen angeordnet und vorzugsweise so in Richtung des Grillrostes gerichtet, dass sich eine gewünschte gleichmäßige Erhitzung von Grillgut ergibt. Ein solcher Brennstab hat den Vorteil, dass er leicht zu handhaben und in Lagerelemente am Trägerrahmen der Grillvorrichtung anbringbar ist. Ferner kann er auch gut in einem Stapel aus Einzelteilen der Grillvorrichtung untergebracht werden.

Die Heizeinrichtung weist einen Anschluss für einen Vorratsbehälter mit brennbarem Gas im flüssigen Zustand auf. Insbesondere ist zwischen der Heizeinrichtung und diesem Vorratsbehälter ein Druckregler vorgesehen. Wird als Heizeinrichtung ein rohrförmiger Brennstab eingesetzt, kann dieser an einem Ende einen Anschluss für einen Vorratsbehälter mit brennbarem Gas in flüssigem Zustand aufweisen, während das gegenüber liegende Ende gasdicht verschlossen ist. Entzündbares Gas strömt durch eine GaseinlassÖffnung auf der Anschlussseite in den Brennstab ein und tritt durch mehrere Löcher aus und kann entzündet werden. Das gasdichte Ende des Brennstabs kann beispielsweise verschweißt, verklebt oder durch eine Quetschnaht verschlossen sein.

Der Anschluss für einen Vorratsbehälter mit brennbarem Gas liegt dabei vorzugsweise auf der Außenseite des Trägerrahmens, so dass er bei eingebauter Hitzeeinrichtung von außen zugänglich ist. Dabei ist er weitestgehend gegen Hitze von der Hitzeeinrichtung abgeschirmt. Wird ein Vorratsbehälter über einen Schlauch an die Heizeinrichtung angeschlossen, liegt dieser zusammen mit einem Druckregler außerhalb des Trägerrahmens. Der Vorratsbehälter mit dem brennbaren Gas kann so in einem ausreichend sicheren Abstand zu den Flammen der Heizeinrichtung positioniert werden, wobei vorzugsweise ein Flexschlauch beispielsweise aus Edelstahl zur Anwendung kommt.

Die Lagerelemente zum Halten der Heizeinrichtung können auf verschiedene Arten ausgebildet sein. Beispielsweise kann es sich um Auflagen, Rasteinrichtungen, Ausnehmungen, etc. handeln. Ferner sind die Lagerelemente entweder so ausgebildet, dass die Heizeinrichtung an dem Trägerrahmen anbringbar ist, nachdem dieser zuvor vollständig zusammengebaut wurde. In einer alternativen Ausführungsform ist vorgesehen, dass die Einbringung der Heizeinrichtung als Schritt in den Zusammenbau der Grillvorrichtung integriert ist. Ein Lagerelement ist durch eine Öffnung im Trägerrahmen gebildet, in welche ein Abschnitt der Heizeinrichtung mit Spiel eingeschoben ist. So kann die Heizeinrichtung auf einfache Weise in eine Öffnung eingeschoben werden und auch wieder aus ihr herausgezogen werden. Dies bietet sich insbesondere bei Heizeinrichtungen in Form von Brennstäben an, die durch eine Öffnung hindurchgeschoben werden. Vorzugsweise sind beide Lagerelemente als gegenüber liegende Öffnungen ausgeführt, in welche die Heizeinrichtung mit Spiel eingeschoben ist.

Um die Sicherheit der Grillvorrichtung zu erhöhen, ist jedoch vorgesehen, dass eine Bewegung der Heizeinrichtung in Richtung zwischen den beiden Lagerelementen durch ein Sperrelement an der Heizeinrichtung begrenzt ist. So kann die Heizeinrichtung nicht unbeabsichtigt aus dem Trägerrahmen herausgezogen oder -geschoben werden. Ein solches Sperrelement kann ebenfalls auf verschiedene Arten ausgeführt sein. Es sollte so gestaltet sein, dass es bei eingebauter Heizeinrichtung ihre Bewegung in Richtung zwischen den beiden Lagerelementen begrenzt, d.h. optional kann eine geringfügige Bewegung zugelassen werden. Um die Heizeinrichtung zu entfernen, kann das Sperrelement aber mit einfachen Zug- und/oder Drehbewegungen der Heizeinrichtung überwunden werden.

Dabei wird ein äußeres und ein inneres Sperrelement eingesetzt. Ein äußeres Sperrelement liegt auf der Außenseite des Trägerrahmens, während ein inneres Sperrelement auf der Innenseite des Trägerrahmens liegt. Eine Öffnung innerhalb des Trägerrahmens kann dabei einen Abschnitt der Heizeinrichtung so aufnehmen, dass sie bei Betrieb der Grillvorrichtung durch Formschluss in der Öffnung gehalten ist. Dieser Formschluss kann aber für eine Demontage der Grillvorrichtung mit einfachen Zug- und/oder Drehbewegungen der Heizeinrichtung aufgelöst werden.

In einer Ausführungsform der Erfindung ist ein hierzu verwendetes Sperrelement durch einen Befestigungsabschnitt gebildet, der in einem Winkel α zu der Längsachse der Heizeinrichtung von dieser absteht, und in diese Richtung eine Höhe H hat, die größer ist als die Höhe h der Öffnung eines Lagerelementes. Dies bezieht sich auf den Betriebszustand der Grillvorrichtung, in welchem sie auf einer im Wesentlichen horizontalen Ebene aufgestellt ist. Der Befestigungsabschnitt steht insbesondere in einem Winkel α von etwa 90° zu der Längsachse der Heizeinrichtung ab. Wird als Öffnung beispielsweise ein horizontal verlaufender Schlitz mit einer Höhe h verwendet, kann ein äußeres Sperrelement einen solchen Befestigungsabschnitt aufweisen, der entweder nach unten oder oben abgewinkelt ist. Der Befestigungsabschnitt befindet sich auf der Außenseite des Trägerrahmens und stößt gegen diese Außenseite, wenn er mit der Heizeinrichtung nach innen gezogen wird, da er nicht durch den Schlitz passt.

Um die Heizeinrichtung mit diesem abgewinkelten Befestigungsabschnitt an dem Trägerrahmen montieren können, wird die Heizeinrichtung leicht um die Längsachse des Schlitzes im Trägerrahmen gekippt, wodurch der Befestigungsabschnitt mit einer Kippbewegung durch den Schlitz führbar ist. Für ein Entfernen der Heizeinrichtung wird diese Bewegung in umgekehrter Richtung durchgeführt. Das Sperrelement begrenzt daher nur bei betriebsbereiter Heizeinrichtung ihre Bewegung, was jedoch durch einfache Zug- und/oder Drehbewegungen auflösbar ist. So wird eine Sicherung der Heizeinrichtung innerhalb der Grillvorrichtung bereitgestellt, die dennoch einfach und intuitiv ohne Werkzeug lösbar ist.

Ein Sperrelement ist durch einen verbreiterten Vorsprung gebildet, dessen Breite B größer ist als die Breite b der Öffnung eines Lagerelementes. Dieses Sperrelement ist als inneres Sperrelement auf der Innenseite des Trägerrahmens ausgebildet. So kann verhindert werden, dass die Heizeinrichtung nach außen durch eine Öffnung geschoben wird. Dies ist insbesondere bei einem rohrförmigen Brennstab vorteilhaft, da dieser ansonsten ungehindert durch zwei gegenüber liegende Öffnungen geschoben werden könnte.

Das innere Sperrelement und das äußere Sperrelement sind nur r an einem Ende der Heizeinrichtung vorgesehen, so dass die Heizeinrichtung in einer Öffnung gegen eine Bewegung nach innen und nach außen begrenzt ist. An einer gegenüber liegenden Öffnung kann dann auf Sperrelemente verzichtet werden. Es ist vorgesehen, dass ein Lagerelement als horizontaler Schlitz im Trägerrahmen ausgebildet ist, durch den ein abgeflachter, abgewinkelter Befestigungsabschnitt am Ende des Brennstabs geführt ist, um ein äußeres Sperrelement zu bilden. Als inneres Sperrelement ist an diesem Ende des Brennstabs auch der beschriebene Vorsprung ausgebildet. Das gegenüber liegende Lagerelement ist hingegen als Durchgangsöffnung ausgebildet, durch die das andere Ende des Brennstabs geführt werden kann.

Ein Schlitz als Lagerelement in Kombination mit einer Abflachung am Ende eines runden Brennstabs, wobei die Abflachung durch den Schlitz geschoben wird, hat ferner den Vorteil, dass der Brennstab so auch gegen ein Verdrehen um seine Längsachse gesichert werden kann. Die Abmessungen der Abflachung und des Schlitzes werden entsprechend so gewählt, dass sich die Abflachung möglichst wenig oder sogar gar nicht innerhalb des Schlitzes um die Längsachse des Brennstabs drehen kann. Ein solcher Verdrehschutz in einem Lagerelement kann jedoch auch auf andere Weise ausgebildet sein. Beispielsweise könnte der Brennstab vollständig oder wenigstens teilweise einen polygonalen Querschnitt haben, der in einer korrespondierend ausgebildeten Öffnung im Trägerrahmen gegen Verdrehen um seine Längsachse gesichert ist. Vorzugsweise ist somit zwischen der Heizeinrichtung und dem Trägerrahmen in wenigstens einem Lagerelement ein Verdrehschutz herstellbar, der jedoch ebenfalls durch einfache Zug- und/oder Drehbewegungen wieder auflösbar ist.

Um eine Heizeinrichtung trotz verschiedener Arten von Sperrelementen montieren zu können, wird die Einbringung der Heizeinrichtung vorzugsweise als Schritt in den Zusammenbau der Grillvorrichtung integriert. Bei welchen Bauschritten dies vorteilhafterweise erfolgt, hängt im Wesentlichen von der Konstruktion des Trägerrahmens und der für die Verbindung der Einzelteile genutzten Steckverbindungen ab. In einer Ausführungsform der Erfindung wird der Trägerrahmen wenigstens durch vier rechtwinklig zueinanderstehende Seitenwände gebildet, die untereinander mit lösbaren Steckverbindungen verbunden sind. Hierbei können verschiedene Arten von Steckverbindungen zum Einsatz kommen, wobei alle Steckverbindungen von der gleichen Art sein können. Verschiedene Arten von Steckverbindungen können aber auch kombiniert werden.

Als vorteilhaft hat es sich erwiesen, wenn wenigstens die lösbaren Steckverbindungen für die Seitenwände jeweils durch Hakenlaschen gebildet sind, die durch eine Bewegung in Richtung der zu verbindenden Kanten der Seitenwände mit einem korrespondierenden Einsteckschlitz verzahnbar sind. Sollen beispielsweise zwei senkrecht stehende Seitenwände über ihre Kanten miteinander verbunden werden, befinden sich an diesen Kanten hakenförmige Hakenlaschen mit gegenläufigen Einsteckschlitzen. Hakenlasche und Einsteckschlitz werden durch eine Bewegung in Richtung der Kanten ineinandergesteckt und so miteinander verhakt. Auf die gleiche Weise können die Hakenlaschen auch wieder aus den Einsteckschlitzen gelöst werden. In einer Ausführungsform der Erfindung befinden sind an zwei gegenüber liegenden Seitenwänden jeweils zwei nach unten gerichtete Hakenlaschen, die von oben in Einsteckschlitze an den zwei anderen Seitenwänden einführbar sind.

Vorzugsweise befinden sich derartige Hakenlaschen und Einsteckschlitze nur an den oberen Kanten der Seitenwände, während die Seitenwände im unteren Bereich durch andere Arten von Steckverbindungen miteinander verbunden werden. Beispielsweise befindet sich unterhalb der Heizeinrichtung ein Bodenteil, welches durch lösbare Steckverbindungen an den vier Seitenwände angebracht ist. Für diese Steckverbindungen werden vorzugsweise einfachere Verbindungen gewählt. Insbesondere handelt es sich um jeweils eine Hakenlasche, die in einem einfachen Schlitz in einer Seitenwand verhakt wird. Auch kann es sich um eine einfache Lasche handeln, die in einen Schlitz geschoben wird. Durch diese Kombination verschiedener Steckverbindungen ist es möglich, die Grillvorrichtung nach einem bestimmten Bauschema zusammenzufügen, ohne dass dabei Wände oder Hakenlaschen unter Druck zusammengefügt oder sogar verbogen werden müssen. In dieses Bauschema kann auch die Einbringung der Heizeinrichtung integriert werden. Zusammengebaut ergibt sich eine äußerst stabile und verwindungssteife Grillvorrichtung.

Ein Bodenteil ist vorzugsweise als abgewinkeltes Blech ausgeführt, damit sich eine konkave Abtropffläche ergibt, auf der sich von oben herabtropfendes Material sammeln kann. Um die Gasgrillfunktion der erfindungsgemäßen Grillvorrichtung zu verbessern, kann ferner zwischen der Heizeinrichtung und dem Grillrost eine Flammabdeckung eingebracht sein. Auch diese Flammabdeckung ist vorzugsweise durch lösbare Steckverbindungen an dem Trägerrahmen angebracht, wobei ihre Anbringung ebenfalls zur Verwindungssteife der Grillvorrichtung beitragen kann. Die Flammabdeckung wird vorzugsweise durch ein dachförmiges Blech gebildet, welches oberhalb der Heizeinrichtung zwischen den beiden Wänden mit den Lagerelementen verläuft. Die Flammabdeckung weist mehrere Aussparungen auf, durch welche Flammen hindurchtreten können. Somit kann die Hitze besser auf das zu grillende Gut auf dem Grillrost verteilt werden.

Darüber hinaus kann in einer Ausführungsform vorgesehen sein, dass die Seitenwände Standfüße ausbilden. Dies kann dadurch erreicht werden, dass an der Unterseite von wenigstens zwei Seitenwänden wenigstens eine Einbuchtung vorgesehen ist. Neben dieser Einbuchtung bilden sich so Standfüße aus, so dass die Grillvorrichtung nicht mit langen, durchgehenden Kanten auf einem Boden aufliegt, sondern mit wenigstens vier Standfüßen mit kürzeren Kanten. Dies erhöht die Stabilität der Grillvorrichtung bei unebenem Boden. Dies kann ergänzt werden durch jeweils eine weitere Einbuchtung in den Standfüßen. So kann die Grillvorrichtung mit diesen zweiten Einbuchtungen auf zwei quer angeordneten Ästen abgesetzt werden. Hierdurch kann ebenfalls die Stabilität der Grillvorrichtung erhöht werden, wobei Äste leicht zu finden sind und somit nicht zusätzlich mitgeführt werden müssen. Dabei kann die Grillvorrichtung auch auf eine flache Transporttasche gestellt werden, in welcher die Bauteile der Grillvorrichtung in einem flachen Stapel transportierbar sind.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt:
- Fig. 1: eine Ausführungsform einer erfindungsgemäßen Grillvorrichtung in einer perspektivischen Darstellung,

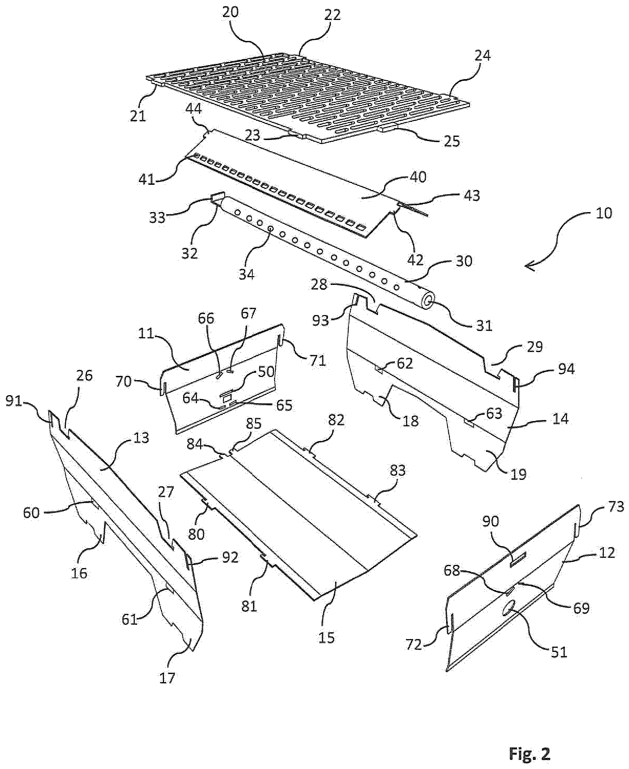

- Fig. 2: die Grillvorrichtung gemäß Fig. 1 in einer Explosionsdarstellung,
- Fig. 3: eine erste Seitenansicht der Grillvorrichtung,
- Fig. 4: eine zweite Seitenansicht der Grillvorrichtung,
- Fig. 5: eine Längsansicht der Grillvorrichtung,
- Fig. 6: eine Aufsicht auf eine Grillvorrichtung, und
- Fig. 7: einen Montageschritt bei der Anbringung einer Heizeinrichtung.

In den Figuren ist eine Ausführungsform einer erfindungsgemäßen Grillvorrichtung 10 dargestellt, die insbesondere für Outdooraktivitäten, wie beispielsweise Wandertouren oder Camping, geeignet ist. Die im vorliegenden Ausführungsbeispiel gezeigte Grillvorrichtung 10 umfasst einen Trägerrahmen und einen an dem Trägerrahmen angebrachten Grillrost 20. Der Trägerrahmen wird durch mehrere plattenförmige Wände gebildet, insbesondere durch vier Seitenwände 11, 12, 13 und 14. Insgesamt wird so ein quaderförmiger Trägerrahmen mit einer oberen Öffnung gebildet, in welche der Grillrost 20 eingebracht ist. Zwei kürzere Seitenwände 11 und 12 sind dabei über zwei längere Seitenwände 13 und 14 miteinander verbunden. Diese Form mit zwei kürzeren und zwei längeren Seitenwänden ist jedoch nicht einschränkend zu verstehen, sondern die Beschreibung gilt auch für Formen mit gleich langen Seitenwänden oder anderen Seitenverhältnissen.

Die Unterseite der Grillvorrichtung 10 wird durch ein Bodenteil 15 abgeschlossen, welches mit allen Seitenwänden 11, 12 und 13, 14 verbunden ist. Dabei ist das Bodenteil 15 ebenfalls plattenförmig ausgebildet, weist jedoch eine Abwinkelung auf, so dass sich eine konkave Rinne ergibt, die zwischen den beiden kürzeren Seitenwänden 11 und 12 verläuft. So bildet das Bodenteil 15 eine Abtropfrinne, die vorzugsweise geschlossen ausgebildet ist.

Ferner weist die Grillvorrichtung 10 eine Heizeinrichtung 30 auf, die mit einem brennbaren Gas betrieben wird. Die Heizeinrichtung 30 ist in dieser Ausführungsform als Brennstab mit einem runden Querschnitt ausgebildet, der mehrere Austrittsöffnungen zum Ausströmen von brennbarem Gas aufweist, von denen eine Austrittsöffnung exemplarisch mit der Bezugsziffer 34 versehen ist. Diese Austrittsöffnungen 34 sind über die Länge des Brennstabs 30 beabstandet voneinander in einer Reihe angeordnet, wobei hiervon mehrere Reihen vorgesehen sein können. Die Heizeinrichtung 30 kann jedoch auch eine andere Form haben. Beispielsweise kann sie auch als Quader oder flache Platte mit mehreren Austrittsöffnungen zum Ausströmen von Gas ausgeführt sein.

Die Heizeinrichtung 30 verläuft zwischen den beiden kürzeren Seitenwänden 11 und 12 und ist an diesen in jeweiligen Lagerelementen gehalten. Diese Lagerelemente werden durch Öffnungen in den kurzen Seitenwänden 11 und 12 gebildet. Eine Öffnung in der Seitenwand 11 ist dabei durch einen Schlitz 50 ausgebildet, während eine Öffnung in der gegenüberliegenden Seitenwand 12 durch eine kreisrunde Aussparung 51 ausgebildet ist. Das Rohr des Brennstabs 30 weist an einem Ende eine Abflachung 32 auf, mit welcher er in den Schlitz 50 geschoben ist. Die Abflachung 32 wird beispielsweise durch eine Quetschnaht oder eine Verschweißung eingeleitet, mit welcher das Rohr des Brennstabs an diesem Ende gasdicht verschlossen ist. Mit seinem anderen Ende ist der Brennstab 30 in die kreisrunde Aussparung 51 eingeschoben. An diesem Ende des Brennstabs 30 befindet sich auch der Anschluss für einen Vorratsbehälter mit brennbarem Gas in flüssiger Form, so dass sich an diesem Ende eine Gaseinlassöffnung 31 befindet, über welche Gas in den Brennstab 30 strömen kann, um anschließend durch die Austrittsöffnungen 34 zu entweichen. Das Ende mit der Abflachung 32 ist hingegen gasdicht ausgeführt.

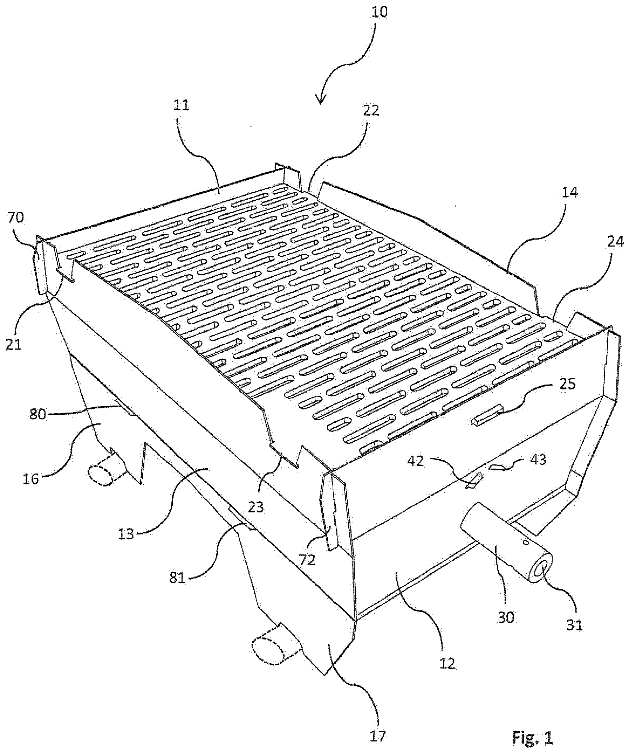

Die Gaseinlassöffnung 31 und damit der Anschluss für einen Vorratsbehälter mit Gas in flüssiger Form befindet sich im montierten Zustand auf der Außenseite des durch die Seitenwände gebildeten Trägerrahmens, d.h. auf der Außenseite der Seitenwand 12. Dies ist insbesondere der Ansicht der Fig. 1 zu entnehmen. Der Brennstab 30 ragt somit mit einer gewissen Länge über die Seitenwand 12 hinaus.

Oberhalb der Heizeinrichtung 30 ist eine dachförmige Flammabdeckung 40 angeordnet. Die Flammabdeckung ist auf eine Art ausgebildet, wie sie von üblichen Gasgrillen bekannt ist. Insbesondere weist sie mehrere Flammöffnungen 41 auf, die voneinander beabstandet in zwei seitlichen Reihen angeordnet sind.

Die beiden längeren Seitenwände 13 und 14 weisen an ihren Unterkanten jeweils eine mittlere Einbuchtung auf, durch welche jeweils zwei Standfüße 16, 17 und 18, 19 ausgeformt werden. Zusätzlich ist in den Unterkanten dieser Standfüße 16, 17, 18, 19 jeweils eine weitere, kleinere Einbuchtung ausgeformt. Mit diesen Einbuchtungen kann die Grillvorrichtung optional auf quer gelegte Äste aufgesetzt werden, wie es in der Fig. 1 gestrichelt dargestellt ist.

Diese verschiedenen Einzelteile der Grillvorrichtung sind durch mehrere lösbare Steckverbindungen miteinander verbunden. Die vier Seitenwände 11, 12, 13, 14 sind an ihren senkrechten Kanten über Steckverbindungen miteinander verbunden, die durch hakenförmige Laschen und Einsteckschlitze hergestellt werden. Diese Laschen werden im Folgenden auch als Hakenlaschen bezeichnet, da sie wie Haken von den Seitenwänden abstehen. Beispielsweise weist die Seitenwand 11 an ihren seitlichen Kanten jeweils eine Hakenlasche 70 und 71 auf, während die gegenüber liegende Seitenwand 12 an ihren seitlichen Kanten zwei Hakenlaschen 72 und 73 aufweist. Diese Hakenlaschen befinden sich im oberen Bereich der Seitenwände 11, 12, so dass sie von oben in entsprechende Schlitzte in den beiden anderen seitenwänden 13 und 14 einführbar sind. Die Seitenwand 13 weist zwei solche Einsteckschlitze 91, 92 auf, während die gegenüberliegende Seitenwand 14 zwei Einsteckschlitze 93, 94 aufweist.

Das Bodenteil 15 ist mit weiteren Steckverbindungen mit den Seitenwänden 11, 13 und 14 verbunden. In der dargestellten Ausführungsform besteht keine Steckverbindung zur Seitenwand 12, da diese Seitenwand 12 vorzugsweise zuletzt montiert wird und eine weitere Steckverbindung in diesem Bereich ein Einschieben der Hakenlaschen 7, 73 von oben in die Einsteckschlitze 92, 94 erschweren würde.

Das Bodenteil 15 weist vier Laschen 80, 81, 82, und 83 auf, die in entsprechende Schlitze 60, 61, 62, 63 in den Seitenwänden 13 und 14 einschiebbar sind. Dabei sind diese Laschen 80, 81, 82, 83 ebenfalls hakenförmig ausgeformt, wobei die Haken in Richtung der Seitenwand 11 ragen. Beim Einschieben der Laschen 80, 81, 82, 83 in die Schlitze 60, 61, 62, 63 wird das Bodenteil 15 daher leicht in Richtung Seitenwand 11 gedrückt, um eine Verhakung zu realisieren. An einer der Seitenwand 11 zugewandten Seite des Bodenteils 15 stehen zwei weitere Laschen 84 und 85 ab. Diese werden durch einfache Ausbuchtungen gebildet ohne Hakenfunktion. Sie werden daher einfach in entsprechende Schlitze 64 und 65 in der Seitenwand 11 eingeschoben und dabei nicht verhakt. Die Laschen 84 und 85 liegen einfach in den Schlitzen 64 und 65 auf, so dass diese Schlitze 64, 65 auch als Auflageschlitze zu bezeichnen sind.

Weitere Auflageschlitze 66, 67, 68 und 69 sind in der Seitenwand 11 und der Seitenwand 12 vorgesehen, um die Flammabdeckung 40 zu halten. Hierzu weist die Flammabdeckung 40 an ihren Enden jeweils zwei einfache Laschen 42, 43 und 44, 45 auf, die ohne Verhakung in die Auflageschlitze 66, 67, 68 und 69 eingeschoben sind. Durch die abgewinkelte Dachform der Flammabdeckung 40 stehen die Laschen 42, 43, 44, 45 und damit die Auflageschlitze 66, 67, 68, 69 schräg.

Der Grillrost 20 ist ebenfalls über Laschen und Aufnahmen mit den vier Seitenwänden 11, 12, 13, 14 verbunden. Hierzu weist der Grillrost 20 vier an den Seiten abstehende Auflagezähne 21, 22, 23, und 24 auf. Diese können von oben in entsprechend ausgeformte Aufnahmen an den Seitenwänden eingelegt werden, die nach oben hin offen sind. Diese Aufnahmen 26, 27, 28 29 befinden sich beispielsweise an den oberen Kanten der längeren Seitenwände 13 und 14 und ihr Querschnitt weitet sich nach oben hin auf. Ergänzend ist ein weiterer abstehender Steckzahn 25 an dem Grillrost 20 ausgeformt, der in einen weiteren Auflageschlitz 90 an der Seitenwand 12 eingeschoben ist.

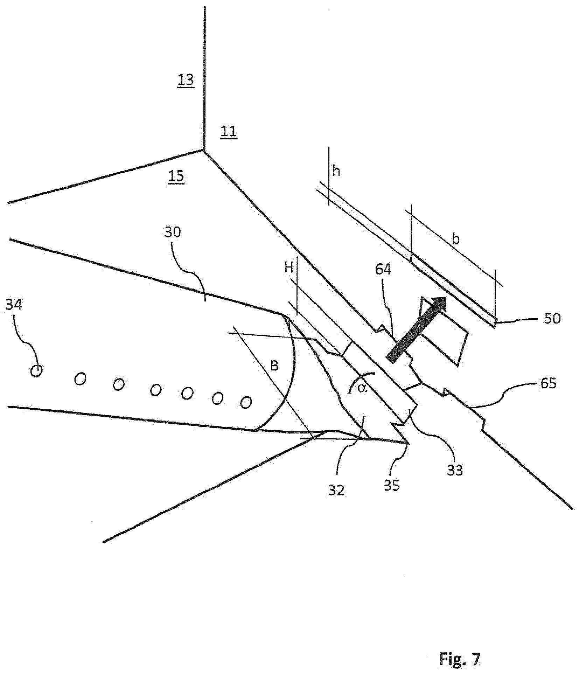

In dem in Fig. 1 gezeigten Zustand ist die Grillvorrichtung 10 komplett montiert und kann zum Grillen von Grillgut auf dem Grillrost 20 genutzt werden. Hierzu wird ein Vorratsbehälter mit brennbarem Gas in flüssiger Form an den Brennstab 30 angeschlossen, was insbesondere auch die Anbringung von Druckreglern, Druckventilen, Schläuchen, etc. beinhalten kann. Die Grillvorrichtung 10 ist stabil, sehr verwindungssteif und sicher zu handhaben. Insbesondere ist der Brennstab 30 dabei gegen eine Bewegung innerhalb der Öffnungen 50 und 51 gesichert, wie es anhand der Fig. 7 beschrieben werden wird.

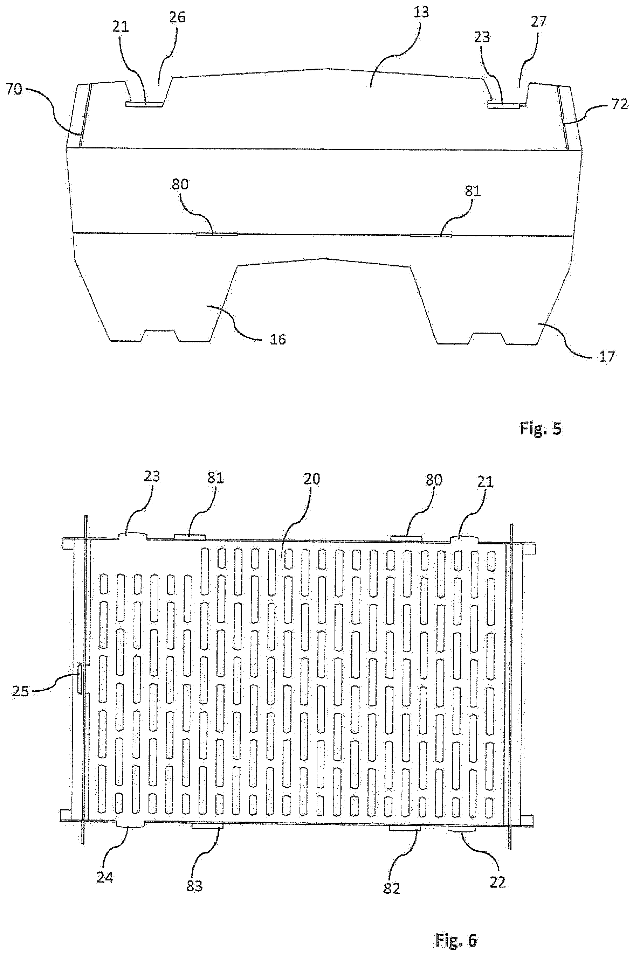

Um die Grillvorrichtung 10 aus ihren diversen Einzelteilen in den Zustand der Fig. 1 zu versetzen, wird vorzugsweise ein vorgegebenes Montageschema eingehalten. Insbesondere werden zunächst die beiden längeren Seitenwände 13 und 14 über die beschriebenen Steckverbindungen mit der kürzeren Seitenwand 11 verbunden. Die beiden Seitenwände 13, 14 werden leicht auseinandergespreizt, um das Bodenteil über die ebenfalls beschriebenen Steckverbindungen mit den drei Seitenwänden 11, 13, 14 zu verbinden. Ferner wird das Ende des Brennstabs 30 mit der Gaseinlassöffnung 31 von innen durch die Öffnung 51 in der Seitenwand 12 geschoben. In diesem Zustand wird das andere Ende des Brennstabs 30 mit der Abflachung 32 durch den Schlitz 50 in der Seitenwand 11 geschoben. Hierzu wird der Brennstab 30 leicht um die Längsachse des Schlitzes 50 nach oben gekippt, um einen hochgewinkelten Befestigungsabschnitt 33 an der Abflachung 32 durch den Schlitz 50 schieben zu können. Dieser Vorgang ist mit einem Pfeil in Fig. 7 gezeigt. Da der Brennstab 30 mit Spiel in die runde Öffnung 51 eingeschoben ist, kann die Seitenwand 12 leicht nach außen gekippt werden, um die Flammabdeckung 40 mit ihren Laschen 42, 43, 44, 45 in die Auflageschlitze 66, 67, 68, 69 zu schieben. Die Seitenwand 12 wird in Richtung der gegenüberliegende Seitenwand 11 gedrückt, um die Flammabdeckung 40 zwischen den beiden Seitenwänden 11, 12 halten zu können. In diesem Zustand kann die Seitenwand 12 nach unten abgesenkt werden, um die Hakenlaschen 72 und 73 von oben in die Einsteckschlitze 92 und 94 der beiden Seitenwände 13, 14 einzuschieben. Anschließend wird der Grillrost 20 schräg mit seinem Steckzahn 25 in den Schlitz 90 eingeschoben und abgesenkt. Dabei können sich die Auflagezähne 21, 22, 23, 24 in den Aufnahmen 26, 27, 28, 29 ablegen. Wie insbesondere aus der Seitenansicht der Fig. 5 ersichtlich, verhaken die Auflagezähne 21, 22, 23 und 24 jeweils mit einem Vorsprung im unteren Bereich einer Seitenwand der jeweiligen Aufnahme 26, 27, 28, 29, wenn der Grillrost 20 mit seinem Steckzahn 25 in Richtung Schlitz 90 eingeschoben wird. So kann der Grillrost 20 nicht mehr ohne Weiteres nach oben aus den Aufnahmen 26, 27, 28, 29 gehoben werden. Hierzu muss der Grillrost 20 vielmehr zunächst mit seinem Steckzahn 25 aus dem Schlitz 90 gezogen werden, um die Verhakung mit dem Vorsprung einer jeweiligen Aufnahme zu lösen. Ferner kann am Boden einer Aufnahme 26, 27, 28, 29 eine Vertiefung vorgesehen sein, in welche sich ein Auflagezahn 21, 22, 23 und 24 beim Einschieben unter einen Vorsprung absenkt (siehe z.B. rechte Aufnahme 27 in Fig. 5). Der Grillrost 20 ist so gegen eine horizontale Bewegung gesichert, und wird bei entsprechendem Gewicht des Grillrostes 20 durch Schwerkraft in der Vertiefung gehalten. Diese Sicherung wird aufgehoben, wenn der Grillrost 20 mit einer Zug- und Kippbewegung aus dem Schlitz 90 und den Aufnahmen 26, 27, 28, 29 gehoben wird.

In diesem Endzustand ist der Brennstab 30 gegen eine Bewegung zwischen den beiden Öffnungen 50, 51 gesichert, da an dem Schlitz 50 wenigstens ein Sperrelement, vorzugsweise aber zwei Sperrelemente wirken (siehe Fig. 7). Ein erstes Sperrelement wird durch den Befestigungsabschnitt 33 gebildet, der in einem Winkel α von der Längsachse des Brennstabs 30 absteht. Er steht hier nach oben ab und hat in diese Richtung eine Höhe H, die größer ist als die Höhe h des Schlitzes 50. Der Befestigungsabschnitt 33 liegt auf der Außenseite der Seitenwand 11 und verhindert durch Formschluss eine Bewegung des Brennstabs 30 in Richtung der gegenüberliegenden Seitenwand 12, da der Befestigungsabschnitt in dieser Lage nicht durch den Schlitz 50 passt. Der Brennstab 30 kann daher nicht unbeabsichtigt durch die Öffnung 51 aus der Grillvorrichtung herausgezogen werden. Wird beispielsweise unbeabsichtigt an einem Schlauch und/oder dem Vorratsbehälter für das brennbare Gas gezogen, führt dies nicht zu einer gefährlichen Situation, bei der ein Brennstab 30 mit Flammen nach außen gezogen wird. Vielmehr ist der Brennstab 30 im Inneren der Grillvorrichtung stets geschützt und sicher untergebracht.

Doch auch ein zu weites Einschieben des Brennstabs 30 durch die Grillvorrichtung hindurch wird durch ein weiteres Sperrelement verhindert. Hierzu ist an der endseitigen Abflachung 32 des Brennstabs 30 ein verbreiterter Vorsprung 35 vorgesehen. Dieser Vorsprung 35 hat eine Breite B, die größer ist als die Breite b des Schlitzes 50 in der Seitenwand 11. Der Vorsprung 35 stößt somit gegen die Innenseite der Seitenwand 11, wenn der Brennstab 30 in diese Richtung gedrückt wird. Die Abflachung 32 in dem Schlitz 50 bewirkt ferner einen Verdrehschutz.

Durch diese Sperrelemente 33, 35 ist der Brennstab 30 in der Grillvorrichtung 10 gesichert. Diese Sicherung kann jedoch durch einfache Zug- und/ oder Drehbewegungen aufgelöst werden, wenn die Grillvorrichtung demontiert wird. Die zuvor beschriebenen Montageschritte werden in umgekehrter Reihenfolge durchgeführt, wobei zuerst die Seitenwand 12 nach oben aus den Einsteckschlitzen 92, 94 gezogen wird, etc. Das Lösen des Brennstabs 30 aus dem Schlitz 50 erfolgt durch eine Zug-/Kippbewegung des Brennstabs 30 nach oben. Anschließend können alle weiteren Steckverbindungen gelöst und der Brennstab auch von der Seitenwand 12 entfernt werden. Am Ende liegt die gesamte Grillvorrichtung in mehreren flachen Einzelteilen vor, die übereinander gestapelt werden können, um sie vorzugsweise in einer Tasche oder einem Rucksack zu transportieren.

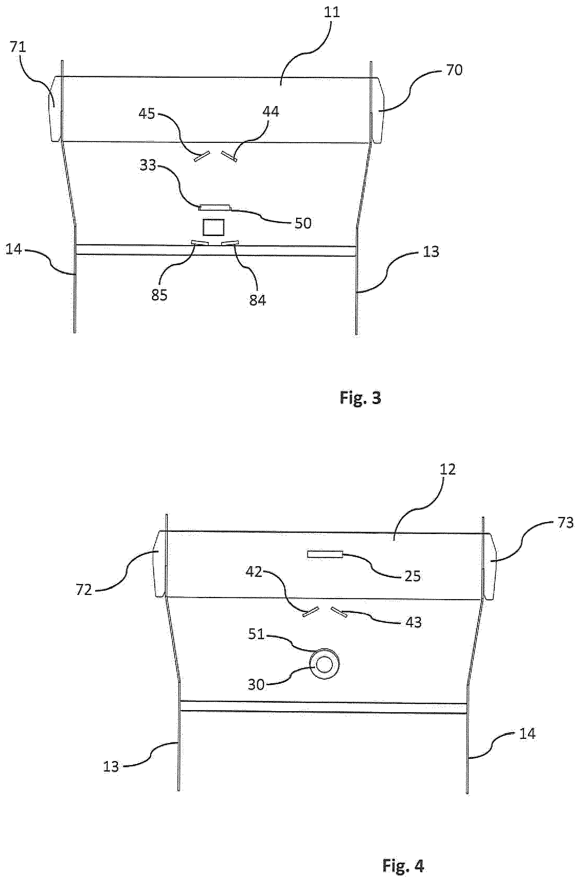

Wie z.B. aus der Fig. 3 ersichtlich, befindet sich im Bereich des Schlitzes 50 eine Öffnung. Durch diese kann die Heizeinrichtung mit einer Flammen- oder Funkenquelle gezündet werden.

### Bezugszeichenliste:

- 10: Grillvorrichtung
- 11,12,13,14: Seitenwand
- 15: Bodenteil
- 16,17,18,19: Standfuß
- 20: Grillrost
- 21,22,23,24: Auflagezahn
- 25: Steckzahn
- 26,27,28,29: Aufnahme
- 30: Heizeinrichtung, Brennstab
- 31: Gaseinlassöfffnung
- 32: Abflachung
- 33: Befestigungsabschnitt
- 34: Austrittsöffnung
- 35: Vorsprung
- 40: Flammabdeckung
- 41: Flammöffnung
- 42,43,44,45: Lasche
- 50,51: Lagerelement, Öffnung
- 60,61,62,63: Schlitz
- 64,65,66,67,68,69: Auflageschlitz
- 70,71,72,73: Hakenlasche
- 80,81,82,83,84,85: Lasche
- 90: Rostsicherung, Schlitz
- 91,92,93,94: Einsteckschlitz

## Patentansprüche

1. Zusammenlegbare Grillvorrichtung (10), bestehend aus einem Trägerrahmen und einem von dem Trägerrahmen gehaltenen Grillrost (20), wobei der Trägerrahmen aus mehreren plattenförmigen Wänden (11;12;13;14;15) gebildet ist, die untereinander durch lösbare Steckverbindungen verbunden sind, und die Grillvorrichtung (10) durch Lösen dieser Steckverbindungen in einen Transport- und Lagerzustand überführbar ist, in welchem die plattenförmigen Wände (11;12;13;14;15) und der Grillrost (20) zu einem flachen Stapel übereinandergelegt sind, wobei der Trägerrahmen wenigstens zwei gegenüberliegende Lagerelemente (50;51) aufweist, in denen eine mit einem brennbaren Gas betriebene Heizeinrichtung (30) lösbar gehalten ist, wobei die Heizeinrichtung (30) als rohrförmiger Brennstab mit mehreren Austrittsöffnungen (34) zum Ausströmen von brennbarem Gas ausgebildet ist, wobei eine Bewegung der Heizeinrichtung (30) in Richtung zwischen den beiden Lagerelementen (50;51) durch Sperrelemente (33, 35) an der Heizeinrichtung (30) begrenzt ist, wobei an einem Ende der Heizeinrichtung (30) ein äußeres Sperrelement (33) auf der Außenseite des Trägerrahmens und ein inneres Sperrelement (35) auf der Innenseite des Trägerrahmens liegen; das innere Sperrelement (35) durch einen verbreiterten Vorsprung gebildet ist, dessen Breite B größer ist als die Breite b der Öffnung eines Lagerelementes (50), wobei das Lagerelement (50) als horizontaler Schlitz im Trägerrahmen ausgebildet ist, durch den ein abgeflachter, abgewinkelter Befestigungsabschnitt am Ende des Brennstabs geführt ist, um das äußere Sperrelement (33) zu bilden, und wobei das gegenüber liegende Lagerelement (51) durch eine Durchgangsöffnung im Trägerrahmen gebildet ist, in welche ein Abschnitt der Heizeinrichtung (30) mit Spiel eingeschoben ist.

2. Grillvorrichtung nach Anspruch 1,
**dadurch gekennzeichnet, dass** der rohrförmige Brennstab (30) an einem Ende einen Anschluss für einen Vorratsbehälter mit brennbarem Gas in flüssigem Zustand aufweist, während das gegenüber liegende Ende des Brennstabs gasdicht verschlossen ist.

3. Grillvorrichtung nach Anspruch 2,
**dadurch gekennzeichnet, dass** der Anschluss für einen Vorratsbehälter mit brennbarem Gas auf der Außenseite des Trägerrahmens liegt

4. Grillvorrichtung nach einem der vorhergehenden Ansprüche,
**dadurch gekennzeichnet, dass** das äußere Sperrelement (33) durch einen Befestigungsabschnitt gebildet ist, der in einem Winkel α zu der Längsachse der Heizeinrichtung (30) von dieser absteht, und in diese Richtung eine Höhe H hat, die größer ist als die Höhe h der Öffnung eines Lagerelementes (50).

5. Grillvorrichtung nach einem der vorhergehenden Ansprüche,
**dadurch gekennzeichnet, dass** der Trägerrahmen wenigstens durch vier rechtwinklig zueinanderstehende Seitenwände (11;12;13;14) gebildet wird, die untereinander mit lösbaren Steckverbindungen verbunden sind.

6. Grillvorrichtung nach einem der vorhergehenden Ansprüche,
**dadurch gekennzeichnet, dass** an der Unterseite von wenigstens zwei Seitenwänden (13;14) eine Einbuchtung vorgesehen ist.

7. Grillvorrichtung nach einem der vorhergehenden Ansprüche,
**dadurch gekennzeichnet, dass** die lösbaren Steckverbindungen jeweils durch Hakenlaschen (70;71;72;73) gebildet sind, die durch eine Bewegung in Richtung der zu verbindenden Kanten der Seitenwände mit korrespondierenden Einsteckschlitzen (91;92;93;94) verzahnbar sind.

8. Grillvorrichtung nach einem der vorhergehenden Ansprüche,
**dadurch gekennzeichnet, dass** zwischen der Heizeinrichtung (30) und dem Grillrost (20) eine Flammabdeckung (40) durch lösbare Steckverbindungen an dem Trägerrahmen angebracht ist.

9. Grillvorrichtung nach einem der vorhergehenden Ansprüche,
**dadurch gekennzeichnet, dass** unterhalb der Heizeinrichtung (30) ein Bodenteil (15) durch lösbare Steckverbindungen an dem Trägerrahmen angebracht ist.

## Claims

1. Foldable grill device (10), consisting of a carrier frame and a cooking grill (20) held by the carrier frame, wherein the carrier frame is formed from a plurality of plate-shaped walls (11;12;13;14;15) which are interconnected by releasable plug-in connections, and the grill device (10) can be converted, by releasing these plug-in connections, into a transport and storage state in which the plate-shaped walls (11;12;13;14;15) and the cooking grill (20) are placed one on top of another to form a flat stack, wherein the carrier frame has at least two opposite bearing elements (50;51) in which a heating device (30) operated with a flammable gas is releasably held, wherein the heating device (30) is designed as a tubular burner rod having a plurality of outlet openings (34) for the outflow of flammable gas, wherein a movement of the heating device (30) in the direction between the two bearing elements (50;51) is limited by blocking elements (33, 35) on the heating device (30), wherein, at one end of the heating device (30), an outer blocking element (33) is located on the outside of the carrier frame and an inner blocking element (35) is located on the inside of the carrier frame; the inner blocking element (35) is formed by a widened projection, the width B of which is greater than the width b of the opening of a bearing element (50), wherein the bearing element (50) is designed as a horizontal slot in the carrier frame, through which a flattened, angled fastening portion at the end of the burner rod is guided in order to form the outer blocking element (33), and wherein the opposite bearing element (51) is formed by a through-opening in the carrier frame into which a portion of the heating device (30) is inserted with play.

2. Grill device according to claim 1,
**characterized in that** the tubular burner rod (30) has, at one end, a connection for a storage container with flammable gas in the liquid state, while the opposite end of the burner rod is closed in a gas-tight manner.

3. Grill device according to claim 2,
**characterized in that** the connection for a storage container with flammable gas is located on the outside of the carrier frame.

4. Grill device according to any one of the preceding claims,
**characterized in that** the outer blocking element (33) is formed by a fastening portion which protrudes from the heating device (30) at an angle α to the longitudinal axis thereof and which has, in this direction, a height H which is greater than the height h of the opening of a bearing element (50).

5. Grill device according to any one of the preceding claims,
**characterized in that** the carrier frame is formed at least by four side walls (11;12;13;14) which are arranged at right angles to one another and which are interconnected by releasable plug-in connections.

6. Grill device according to any one of the preceding claims,
**characterized in that** an indentation is provided on the underside of at least two side walls (13;14).

7. Grill device according to any one of the preceding claims,
**characterized in that** the releasable plug-in connections are each formed by hook lugs (70;71;72;73) which can be interlocked with corresponding insertion slots (91;92;93;94) by a movement in the direction of the edges of the side walls to be connected.

8. Grill device according to any one of the preceding claims,
**characterized in that** a flame cover (40) is attached to the carrier frame between the heating device (30) and the cooking grill (20) by releasable plug-in connections.

9. Grill device according to any one of the preceding claims,
**characterized in that** a bottom part (15) is attached to the carrier frame below the heating device (30) by releasable plug-in connections.

## Revendications

1. Dispositif de gril pliable (10), constitué d'un cadre porteur et d'une grille de cuisson (20) maintenue par le cadre porteur, dans lequel le cadre porteur est formé de plusieurs parois (11;12;13;14;15) en forme de plaques qui sont reliées entre elles par des liaisons enfichables amovibles, et le dispositif de gril (10) peut être amené, par désolidarisation de ces liaisons enfichables, dans un état de transport et de stockage dans lequel les parois (11;12;13;14;15) en forme de plaques et la grille de cuisson (20) sont superposées en une pile plate, dans lequel le cadre porteur présente au moins deux éléments de support (50;51) opposés l'un à l'autre, dans lesquels un dispositif de chauffage (30) fonctionnant avec un gaz combustible est maintenu de manière amovible, dans lequel le dispositif de chauffage (30) est réalisé sous la forme d'une barre de brûleur tubulaire comportant plusieurs orifices de sortie (34) pour l'écoulement de gaz combustible, dans lequel un déplacement du dispositif de chauffage (30) dans la direction entre les deux éléments de support (50;51) est limité par des éléments de blocage (33, 35) sur le dispositif de chauffage (30), dans lequel, à une extrémité du dispositif de chauffage (30), un élément de blocage extérieur (33) se situe sur la face extérieure du cadre porteur et un élément de blocage intérieur (35) se situe sur la face intérieure du cadre porteur ; l'élément de blocage intérieur (35) est formé par une saillie élargie dont la largeur B est supérieure à la largeur b de l'ouverture d'un élément de support (50), dans lequel l'élément de support (50) est réalisé sous la forme d'une fente horizontale dans le cadre porteur, à travers laquelle une portion de fixation aplatie et coudée, située à l'extrémité de la barre de brûleur, est guidée pour former l'élément de blocage extérieur (33), et dans lequel l'élément de support (51) opposé est formé par une ouverture traversante dans le cadre porteur, dans laquelle une portion du dispositif de chauffage (30) est insérée avec jeu.

2. Dispositif de gril selon la revendication 1,
**caractérisé en ce que** la barre de brûleur tubulaire (30) présente, à une extrémité, un raccord pour un réservoir de gaz combustible à l'état liquide, tandis que l'extrémité opposée de la barre de brûleur est fermée de manière étanche aux gaz.

3. Dispositif de gril selon la revendication 2,
**caractérisé en ce que** le raccord pour un réservoir de gaz combustible se situe sur la face extérieure du cadre porteur.

4. Dispositif de gril selon l'une quelconque des revendications précédentes,
**caractérisé en ce que** l'élément de blocage extérieur (33) est formé par une portion de fixation qui fait saillie à partir du dispositif de chauffage (30) sous un angle α par rapport à l'axe longitudinal de celui-ci et qui présente, dans cette direction, une hauteur H supérieure à la hauteur h de l'ouverture d'un élément de support (50).

5. Dispositif de gril selon l'une quelconque des revendications précédentes,
**caractérisé en ce que** le cadre porteur est formé au moins par quatre parois latérales (11;12;13;14) perpendiculaires les unes aux autres, qui sont reliées entre elles par des liaisons enfichables amovibles.

6. Dispositif de gril selon l'une quelconque des revendications précédentes,
**caractérisé en ce qu'**une échancrure est prévue sur la face inférieure d'au moins deux parois latérales (13;14).

7. Dispositif de gril selon l'une quelconque des revendications précédentes,
**caractérisé en ce que** les liaisons enfichables amovibles sont formées chacune par des languettes à crochet (70;71;72;73) qui peuvent être mises en prise avec des fentes d'insertion (91;92;93;94) correspondantes par un déplacement dans la direction des bords à relier des parois latérales.

8. Dispositif de gril selon l'une quelconque des revendications précédentes,
**caractérisé en ce qu'**un couvre-flamme (40) est fixé au cadre porteur, entre le dispositif de chauffage (30) et la grille de cuisson (20), par des liaisons enfichables amovibles.

9. Dispositif de gril selon l'une quelconque des revendications précédentes, **caractérisé en ce qu'**une partie de fond (15) est fixée au cadre porteur, en dessous du dispositif de chauffage (30), par des liaisons enfichables amovibles.
